# DEMANDE DE BREVET EUROPEEN

(11) **EP 0 696 689 A1**
(43) Date de publication de la demande: **14.02.1996**
(21) Numéro de dépôt: 95401859.4
(22) Date de dépôt: 08.08.1995
(51) Int. Cl.: F16D 55/2255, F16D 59/02

(54) **Frein à disque à étrier basculant**

(30) Priorité: 09.08.1994 FR 9409856
(71) Demandeur: SIME INDUSTRIE, F-18150 La Guerche sur l'Aubois (FR)
(72) Inventeur: Eon, Christian, F-58640 Coulanges les Nevers (FR); Petit, Michel, F-18150 La Guerche-sur-L'Aubois (FR)
(74) Mandataire: CABINET BONNET-THIRION

(57) **Abrégé**

Il s'agit d'un frein à disque du genre comportant un support fixe (10), un disque (11) monté rotatif, deux patins de freinage (12A, 12B) disposés chacun respectivement de part et d'autre du disque (11), et un étrier (13) monté basculant sur le support fixe (10) par une articulation (14).

Suivant l'invention, l'articulation (14) est constituée par un palier élastique, et, au repos, disque (11) serré, cette articulation (14) est sous contrainte et sollicite l'étrier (14) dans la direction pour laquelle sa branche reactive (18B), c'est-à-dire celle ne comportant pas les moyens de serrage (20), s'écarte du disque (11).

Application, notamment, aux freins à disque à usage industriel.

## Description

La présente invention concerne d'une manière générale les freins à disque à usage industriel du genre comportant un support fixe, un disque monté rotatif, deux patins de freinage disposés chacun respectivement de part et d'autre du disque, et un étrier monté basculant sur le support fixe par une articulation, cet étrier comportant globalement deux branches, à savoir, une première branche, ou branche active, qui est équipée de moyens de serrage propres à solliciter en direction du disque un premier des patins de freinage, et une deuxième branche, ou branche réactive, qui, par réaction, est destinée à solliciter également en direction du disque le deuxième de ceux-ci.

Elle a pour objet une disposition permettant une réalisation particulièrement simple de l'articulation entre l'étrier et le support fixe et conduisant en outre à d'autres avantages.

De manière plus précise, elle a pour objet un frein à disque du genre concerné et caractérisé en ce que l'articulation intervenant entre l'étrier et le support fixe est constituée par un palier élastique, et en ce que, au repos, disque serré, cette articulation est sous contrainte et sollicite l'étrier dans la direction pour laquelle sa branche réactive s'écarte du disque.

Par palier élastique, on entend ici un palier qui, mettant en oeuvre, en relation de rotation l'une par rapport à l'autre, deux pièces, comporte, interposé entre celles-ci, au moins un élément en matière élastique solidaire de l'une et de l'autre de ces pièces.

L'articulation comportant en pratique un pivot, l'une quelconque des deux pièces que constituent le support fixe et l'étrier est calée de manière rigide sur ce pivot, et, à la manière des blocs élastiques vendus par exemple sous la désignation commerciale "SILENTBLOC", l'élément élastique est une garniture par laquelle l'autre de ces pièces est reliée au pivot, cette garniture intervenant radialement entre cette pièce et celui-ci.

En variante, le pivot forme par lui-même l'élément élastique.

Quoi qu'il en soit, l'articulation ainsi constituée d'un palier élastique ne comporte avantageusement aucun jeu entre les pièces qui la forment, et ces pièces ne sont avantageusement l'objet d'aucun glissement entre elles.

Cette articulation n'étant ainsi pas l'objet d'un quelconque mouvement de frottement, elle n'est avantageusement pas sujette à usure.

Elle présente en outre les avantages de ne nécessiter ni entretien, ni graissage, au bénéfice de la propreté de l'ensemble, ni aucun autre mode spécifique de protection, de ne pas être sujette à corrosion, d'être au contraire facilement adoptable en milieu agressif, et, enfin, d'être peu coûteuse.

Le frein suivant l'invention est lui-même avantageusement de réalisation particulièrement simple et économique, sans comporter de quelconques systèmes à ressort ni de quelconques bagues de friction à traitement de surface coûteux, et il est aisé à entretenir.

Son montage sur le support fixe peut avantageusement se faire suivant n'importe quelle orientation, et, en pratique, le bandage du palier élastique constituant son articulation assure avantageusement une libération systématique du disque au desserrage.

Ainsi, le frein à disque suivant l'invention est un frein à manque d'énergie dont l'ouverture intervient d'elle-même au relâchement du disque.

Ce bandage étant en pratique effectué sur site, il peut avantageusement être directement adapté au sens de montage du frein.

En service, l'élément élastique de l'articulation assure avantageusement un amortissement des éventuelles vibrations de freinage, et un isolement tant vibratoire qu'électrique par rapport au support fixe.

En outre, lorsque cet élément élastique est une garniture, la sécurité reste avantageusement assurée même en cas de dégradation de cette garniture, celle-ci étant en pratique établie autour d'un pivot rigide.

Enfin, si nécessaire, c'est-à-dire dans l'éventualité d'une dégradation effective de la garniture élastique, celle-ci peut facilement être changée.

Il en est de même du frein dans son ensemble.

En bref, le frein suivant l'invention ne met en jeu qu'un nombre minimal de pièces, il est aisé à monter, son montage peut se faire suivant un axe horizontal, vertical ou quelconque, en ne nécessitant qu'un réglage minimal, sa maintenance sur site est simple, et, ne nécessitant aucun graissage et ne générant aucun produit d'usure, il est avantageusement "propre".

Les caractéristiques et avantages de l'invention ressortiront d'ailleurs de la description qui va suivre, à titre d'exemple, en référence aux dessins schématiques annexés sur lesquels :
la figure 1 est une vue partielle en élévation d'un frein à disque suivant l'invention, suivant la flèche I de la figure 2 ;
la figure 2 en est, avec des arrachements locaux, une vue partielle en plan, suivant la flèche II de la figure 1 ;
la figure 3 en est une vue partielle en coupe axiale suivant la ligne III-III de la figure 2 ;
la figure 4 en est une vue partielle en coupe transversale, suivant la ligne IV-IV de la figure 3 ;
la figure 5 est une vue partielle en coupe transversale analogue à celle de la figure 4, pour une variante de réalisation ;
la figure 6 est une vue partielle en coupe axiale analogue à celle de la figure 2, pour une autre variante de réalisation ;
la figure 7 est une vue partielle en coupe transversale analogue à celle de la figure 4, pour une autre variante de réalisation.

Tel qu'illustré sur ces figures, le frein à disque suivant l'invention comporte, globalement, un support fixe 10, un disque 11 monté rotatif par rapport au support fixe 10, deux patins de freinage 12A, 12B disposés chacun respectivement de part et d'autre du disque 11, au voisinage de la périphérie de celui-ci, et, tel que décrit plus en détail ultérieurement, un étrier 13 monté basculant sur le support fixe 10 par une articulation 14.

Dans la forme de réalisation représentée, le support fixe 10 comporte, pour l'essentiel, un flasque 15 lui permettant, par exemple, d'être rapporté sur un quelconque autre support.

Ce flasque 15 n'est pas visible en entier sur les figures.

De même, le disque 11 n'est visible que partiellement sur celles-ci.

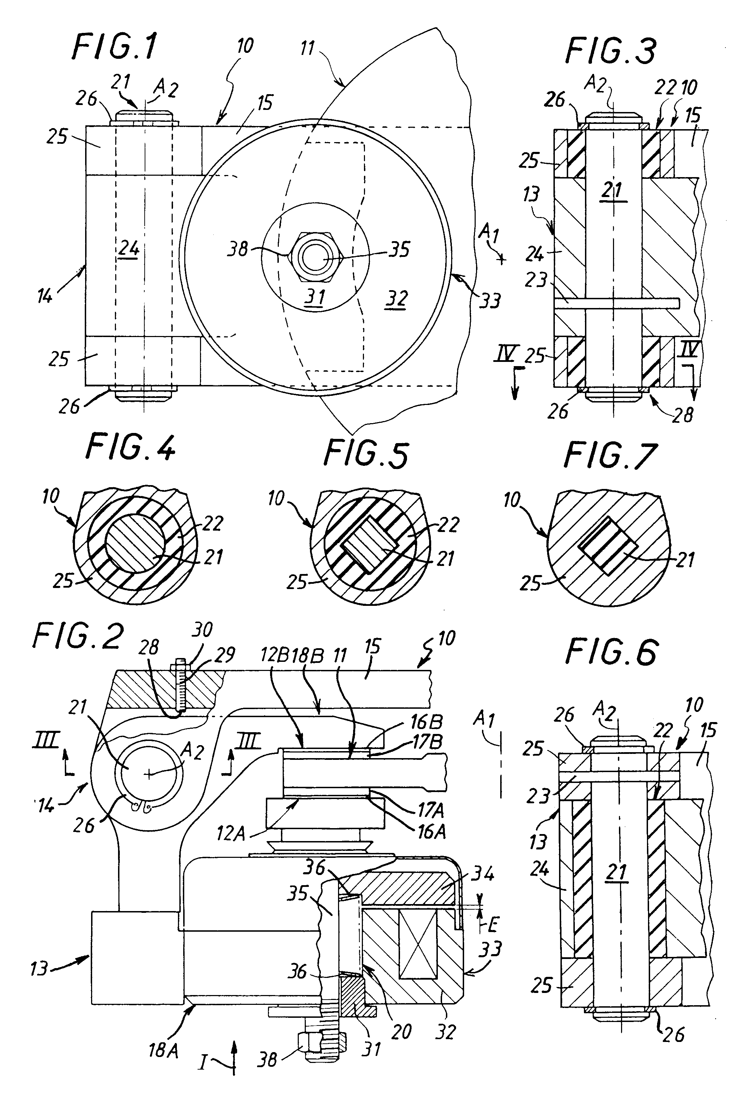

L'axe A1 de ce disque 11 a été schématisé par sa trace sur la figure 1 et il a été représenté en traits interrompus sur la figure 2.

Les patins de freinage 12A, 12B comportent chacun, de manière usuelle, une plaquette de support 16A, 16B et une garniture de frottement 17A, 17B.

L'étrier 13 comporte, enfin, globalement, deux branches 18A, 18B, par lesquelles il est engagé globalement radialement sur le disque 11 et les patins de freinage 12A, 12B.

Il y a, ainsi, une première branche 18A, dite ici par simple commodité branche active, qui, suivant des modalités décrites plus en détail ultérieurement, est équipée de moyens de serrage 20 propres à solliciter en direction du disque 11 un premier des patins de freinage 12A, 12B, en l'espèce le patin de freinage 12A, et une deuxième branche 18B, dite ici par simple commodité branche réactive, qui, par réaction, eu égard à la rigidité d'ensemble de l'étrier 13, est destinée à solliciter également en direction du disque 11 le deuxième des patins de freinage 12A, 12B, en l'espèce le patin de freinage 12B, lorsque, sous la sollicitation des moyens de serrage 20, le patin de freinage 12A porte sur le disque 11 et fournit ainsi un appui à l'ensemble.

En pratique, le patin de freinage 12A est porté par la branche active 18A de l'étrier 13, en étant dûment assujetti à celle-ci, et, de même, le patin de freinage 12B est porté par sa branche réactive 18B, en étant dûment assujetti à celle-ci.

En pratique, également, l'axe A2 de l'articulation 14 intervenant entre l'étrier 13 et le support fixe 10 est orthogonal à l'axe A1 du disque 11.

Cet axe A2 a été représenté en traits interrompus sur la figure 1 et il est schématisé par sa trace sur la figure 2.

Suivant l'invention, l'articulation 14 est constituée par un palier élastique.

Autrement dit, elle comporte, interposé entre les deux pièces que constituent le support fixe 10 et l'étrier 13, un élément en matière élastique, et, par exemple par frottement, le montage étant serré, ou par collage, cet élément en matière élastique est solidaire de l'une et l'autre de ces deux pièces.

En pratique, l'articulation 14 comporte, axialement, un pivot 21.

Dans les formes de réalisation représentées sur les figures 1 à 5, ce pivot 21 est rigide, et par exemple métallique, et l'une quelconque des deux pièces que constituent le support fixe 10 et l'étrier 13 est calée de manière rigide sur ce pivot 21 tandis que l'autre est reliée à celui-ci par au moins une garniture en matière élastique 22.

Autrement dit, la garniture en matière élastique 22 forme dans ce cas l'élément en matière élastique interposé entre le support fixe 10 et l'étrier 13.

Dans la forme de réalisation plus particulièrement représentée sur les figures 1 à 3, c'est l'étrier 13 qui est calé de manière rigide sur le pivot 21, par exemple par au moins une goupille 23.

En pratique, seule une goupille 23 est prévue, et elle s'étend transversalement par rapport au pivot 21.

En pratique, également, l'étrier 13 forme, localement, une oreille 24, par laquelle il est engagé sur le pivot 21, et qui est elle aussi traversée par la goupille 23.

Conjointement, le support fixe 10, qui forme dans ce cas la pièce reliée au pivot 21 par au moins une garniture en matière élastique 22, comporte au moins une oreille 25 par laquelle il est lui-même engagé sur le pivot 21, et la garniture en matière élastique 22 forme une douille, qui est interposée radialement entre ce pivot 21 et cette oreille 25, et qui est calée en rotation tant sur ce pivot 21 que sur cette oreille 25.

Par exemple, la garniture en matière élastique 22 est montée serrée sur le pivot 21, et, de même, l'oreille 25 est montée serrée sur cette garniture en matière élastique 22.

Dans la forme de réalisation représentée, le support fixe 10 comporte deux oreilles 25, qui encadrent l'oreille 24 de l'étrier 13, et il y a une garniture en matière élastique 22 entre chacune d'elles et le pivot 21, aux extrémités de celui-ci.

Le montage serré des garnitures en matière élastique 22 et des oreilles 25 peut suffire au maintien axial du pivot 21.

Dans les formes de réalisation représentées, ce maintien axial est cependant confirmé par deux anneaux élastiques fendus 26, qui interviennent chacun respectivement aux extrémités du pivot 21, au-delà des oreilles 25 du support fixe 10, et qui, en prise chacun avec une gorge du pivot 21, portent chacun sur l'oreille 25 correspondante du support fixe 10.

Suivant l'invention, l'articulation 14 ainsi constituée est sous contrainte au repos, et elle sollicite l'étrier 13 dans la direction pour laquelle sa branche réactive 18B s'écarte du disque 11.

En pratique, cette branche réactive 18B de l'étrier 13 s'étend du côté du support fixe 10, entre celui-ci et le disque 11, et, à l'ouverture, c'est-à-dire lors d'un relâchement du disque 11, elle porte sur une butée 28 montée réglable en position sur le support fixe 10.

Par exemple, et tel que représenté, cette butée 28 est formée par l'extrémité d'une vis, qui est en prise à vissage avec un perçage taraudé 29 du support fixe 10, et qui est bloquée en position sur celui-ci par un écrou 30.

Pour la contrainte recherchée au repos, il suffit de bander en conséquence les garnitures en matière élastique 22 de l'articulation 14 lors même du montage de l'étrier 13 sur le support fixe 10, ou, autrement dit, de disposer suivant une orientation appropriée autour de l'axe A2, lors de ce montage, l'étrier 13 dont est solidaire le pivot 21.

Dans les formes de réalisation représentées, le frein à disque suivant l'invention est, préférentiellement, un frein à manque d'énergie.

Par exemple, et tel que représenté, les moyens de serrage 20 qu'il comporte sont des moyens élastiques qui sollicitent en permanence en direction du disque 11 le patin de freinage 12A auquel ils sont associés.

En pratique, ces moyens élastiques prennent appui sur une pièce 31 solidaire de la culasse 32 d'un électroaimant 33 porté par l'étrier 13, et ils portent sur l'armature 34 de cet électroaimant 33.

Le patin de freinage 12A est lui-même lié à cette armature 34.

Par exemple, et tel que représenté, il est porté par une tige 35, qui traverse axialement l'électroaimant 33, et dont est solidaire, au passage, l'armature 34.

Dans les formes de réalisation représentées, les moyens élastiques constituant les moyens de serrage 20 sont constitués par un empilage de rondelles Belleville 36 disposées annulairement autour de la tige 35 solidaire de l'armature 34.

La pièce 31 sur laquelle ils prennent appui est un bouchon annulaire, qui est en prise à vissage avec la culasse 32 de l'électroaimant 33, autour de la tige 35, et qui, par vissage, permet d'ajuster l'effort de serrage de l'ensemble.

Enfin, la tige 35 est filetée à son extrémité, et, au-delà de la pièce 31, elle porte un écrou 38, pour sa tenue axiale aussi bien que pour l'ouverture ou le maintien mécanique du frein hors énergie.

Pour la position de serrage représentée sur la figure 2, l'électroaimant 33 n'est pas alimenté.

Prenant appui sur la pièce 31, les moyens élastiques constituant les moyens de serrage 20 repoussent l'armature 34, et, donc, la tige 35, en direction du disque 11.

Le patin de freinage 12A solidaire de l'armature 34 est donc appliqué au disque 11 dans la forme de réalisation représentée.

Par réaction, la culasse 32 de l'électroaimant 33 est sollicitée en écartement par rapport au disque 11, et, l'étrier 13 dont elle est solidaire étant lui-même entraîné en conséquence en pivotement autour de l'axe A2 de l'articulation 14, la branche réactive 18B de cet étrier 13 applique aussi le patin de freinage 12B contre le disque 11.

Ainsi serré entre les patins de freinage 12A, 12B, le disque 11 est freiné, éventuellement jusqu'à l'arrêt.

Soit E l'entrefer existant alors entre l'armature 34 et la culasse 32 de l'électroaimant 33.

Pour le desserrage du disque 11, l'électroaimant 33 est alimenté en conséquence.

Par absorption de cet entrefer E, l'armature 34 vient s'appliquer à la culasse 32, et elle entraîne avec elle la tige 35.

Le patin de freinage 12A lié à l'armature 34 est donc écarté du disque 11.

Conjointement, et du fait de la contrainte initiale des garnitures en matière élastique 22 de l'articulation 14, l'étrier 13 est sollicité en direction d'une position d'ouverture pour laquelle sa branche réactive 18B est en appui contre la butée 28.

Par réglage au montage, il est fait en sorte que, eu égard aux bras de levier à prendre en considération, le jeu J existant au serrage entre cette branche réactive 18B de l'étrier 13 et la butée 28 corresponde sensiblement à la moitié de l'entrefer E rapporté au milieu des patins de freinage 12A, 12B.

Ainsi, les patins de freinage 12A, 12B s'écartent d'une même quantité du disque 11 au desserrage.

Dans la forme de réalisation plus particulièrement représentée sur les figures 1 à 4, le pivot 21 a transversalement une section circulaire.

En variante, figure 5, cette section peut être polygonale, et, par exemple, carrée.

Dans un tel cas, le montage des garnitures en matière élastiques 22 sur le pivot 21 peut être simplement un montage glissant.

Dans la variante de réalisation représentée sur la figure 6, le pivot 21 est calé sur le support fixe 10 par la goupille 23.

C'est donc entre l'oreille 24 de l'étrier 13 et ce pivot 21 qu'intervient une garniture en matière élastique 22, alors unique.

Pour le reste, les dispositions sont du même type que les précédentes, et il en est de même du fonctionnement.

Dans tous les cas, la ou les garnitures en matière élastique 22 sont par exemple réalisées en élastomère.

Du fait de l'incompressibilité d'une telle matière élastique, cette ou ces garnitures en matière élastique 22 présentent radialement une certaine rigidité, dont il résulte que, au serrage, le couple de freinage dont est l'objet l'étrier 13 est dûment repris par le support fixe 10.

Dans la forme de réalisation représentée sur la figure 7, le pivot 21 est en matière élastique, et l'une et l'autre des deux pièces que constituent le support fixe 10 et l'étrier 13 sont calées en rotation sur lui.

Autrement dit, le pivot 21 forme dans ce cas par lui-même l'élément en matière élastique interposé entre le support fixe 10 et l'étrier 13.

Par exemple, et tel que représenté, il a transversalement une section polygonale, et par exemple carrée, et les oreilles 25, 24 du support fixe 10 et de l'étrier 13 sont en prise avec lui par des formes conjuguées.

En pratique, le pivot 21 a alors une résistance au cisaillement suffisante pour porter le frein et résister aux efforts de freinage.

Bien entendu, la présente invention ne se limite pas aux formes de réalisation décrites et représentées, mais englobe toute variante d'exécution.

En particulier, au lieu d'être constitués par un électroaimant, les moyens propres à assurer un desserrage du frein pourraient tout aussi bien être d'une autre nature, et, par exemple, être constitués, ou comporter, un vérin hydraulique ou pneumatique.

En outre, le domaine d'application de l'invention n'est pas limité aux seuls freins à manque d'énergie, mais s'étend au contraire tout aussi bien aux freins à émission.

## Revendications

1. Frein à disque, du genre comportant un support fixe (10), un disque (11) monté rotatif, deux patins de freinage (12A, 12B) disposés chacun respectivement de part et d'autre du disque (11), et un étrier (13) monté basculant sur le support fixe (10) par une articulation (14), ledit étrier (13) comportant globalement deux branches (18A, 18B), à savoir une première branche (18A), ou branche active, qui est équipée de moyens de serrage (20) propres à solliciter en direction du disque (11) un premier (12A) des patins de freinage (12A, 12B), et une deuxième branche (18B), ou branche réactive, qui, par réaction, est destinée à solliciter également en direction du disque (11) le deuxième (12B) de ceux-ci, caractérisé en ce que l'articulation (14) intervenant entre l'étrier (13) et le support fixe (10) est constituée par un palier élastique, et en ce que, au repos, disque (11) serré, cette articulation (14) est sous contrainte et sollicite l'étrier (13) dans la direction pour laquelle sa branche réactive (18B) s'écarte du disque (11).

2. Frein à disque suivant la revendication 1, caractérisé en ce que, l'articulation (14) comportant un pivot (21), l'une quelconque des deux pièces que constituent le support fixe (10) et l'étrier (13) est calée de manière rigide sur ledit pivot (21) tandis que l'autre est reliée à celui-ci par au moins une garniture en matière élastique (22).

3. Frein à disque suivant la revendication 2, caractérisé en ce que la pièce (support fixe (10) ou étrier (13)) reliée au pivot (21) par au moins une garniture en matière élastique (22) comporte au moins une oreille (25, 24) par laquelle elle est engagée sur ledit pivot (21), et ladite garniture en matière élastique (22) forme une douille, qui est interposée entre ledit pivot (21) et ladite oreille (25, 24), et qui est calée en rotation tant sur ledit pivot (21) que dans ladite oreille (25, 24).

4. Frein à disque suivant la revendication 3, caractérisé en ce que la garniture en matière élastique (22) est montée serrée sur le pivot (21), et l'oreille (24, 25) est montée serrée sur cette garniture en matière élastique (22).

5. Frein à disque suivant la revendication 1, caractérisé en ce que, l'articulation (14) comportant un pivot (21), ledit pivot (21) est en matière élastique, et l'une et l'autre des deux pièces que constituent le support fixe (10) et l'étrier (13) sont calées en rotation sur lui.

6. Frein à disque suivant l'une quelconque des revendications 1 à 5, caractérisé en ce que la branche réactive (18B) de l'étrier (13) s'étend du côté du support fixe (10) et à l'ouverture, elle porte sur une butée (28) montée réglable en position sur celui-ci.

7. Frein à disque suivant l'une quelconque des revendications 1 à 6, caractérisé en ce que les moyens de serrage (20) comportent des moyens élastiques qui sollicitent en permanence en direction du disque (11) le patin de freinage (12A) auquel ils sont associés.

8. Frein à disque suivant la revendication 7, caractérisé en ce que lesdits moyens élastiques prennent appui sur une pièce (31) solidaire de la culasse (32) d'un électroaimant (33) porté par l'étrier (13) et portent sur l'armature (34) de cet électroaimant (33), et le patin de freinage (12A) concerné est lui-même lié à cette armature (34).
